# EUROPÄISCHE PATENTANMELDUNG

(11) **EP 4 442 106 A1**
(43) Veröffentlichungstag der Anmeldung: **09.10.2024**
(21) Anmeldenummer: 24161450.2
(22) Anmeldetag: 05.03.2024
(51) Int. Cl.: A01D 85/00, A01F 15/08

(54) **BALLENSAMMELWAGEN ZUM TRANSPORTIEREN EINES BALLENS, ARBEITSZUG UMFASSEND EINE RUNDBALLENPRESSE UND EINEN SOLCHEN BALLENSAMMELWAGEN, SOWIE VERFAHREN ZUM ENTLADEN VON BALLEN AUS EINER RUNDBALLENPRESSE EINES SOLCHEN ARBEITSZUGES**

(30) Priorität: 05.04.2023 DE 102023108773
(71) Anmelder: Maschinenfabrik Bernard Krone GmbH & Co. KG, 48480 Spelle (DE)
(72) Erfinder: Mösker, Markus, 48480 Lünne (DE); Kreyenhagen, Michael, 49163 Bohmte (DE); Bruhn, Nils, 48480 Spelle (DE); Berghaus, André, 48727 Billerbeck (DE); Mählmann-Dunker, Hannes, 27251 Neuenkirchen (DE)

(57) **Zusammenfassung**

Die vorliegende Erfindung betrifft einen Ballensammelwagen zum Anhängen an eine Rundballenpresse und zum Transportieren eines Ballens, mit einer Trageinrichtung zum Tragen des Ballens, die zum Aufnehmen des Ballens in eine Ladestellung, zum Transport des Ballens in eine Transportstellung, und zur Abgabe des Ballens auf einen Feldboden in eine Abladestellung verschwenkbar ist, wobei der Ballensammelwagen zwei Räder aufweist, wobei die Trageinrichtung in eine erste Raumrichtung gesehen auf Höhe von oder unterhalb einer Radachse eines Rades des Ballensammelwagens gelagert ist, und/oder dass die Trageinrichtung zwischen den beiden Rädern des Ballensammelwagens angeordnet ist. Die vorliegende Erfindung betrifft weiterhin ein Arbeitszug umfassend eine Rundballenpresse und einen solchen Ballensammelwagen sowie ein Verfahren zum Entladen eines ersten und eines zweiten Ballens aus einer Rundballenpresse eines solchen Arbeitszuges auf einen Feldboden.

## Beschreibung

Die vorliegende Erfindung betrifft einen Ballensammelwagen zum Anhängen an eine Rundballenpresse und zum Transportieren eines Ballens, mit einer Trageinrichtung zum Tragen des Ballens, die zum Aufnehmen des Ballens in eine Ladestellung, zum Transport des Ballens in eine Transportstellung, und zur Abgabe des Ballens auf einen Feldboden in eine Abladestellung verstellbar ist, wobei der Ballensammelwagen zwei Räder aufweist. Die vorliegende Erfindung betrifft weiterhin ein Arbeitszug umfassend eine Rundballenpresse und einen solchen Ballensammelwagen sowie ein Verfahren zum Entladen eines ersten und eines zweiten Ballens aus einer Rundballenpresse eines solchen Arbeitszuges auf einen Feldboden.

In der Landwirtschaft wird Erntegut wie beispielsweise Heu oder Stroh oftmals in Schwaden auf dem Feldboden abgelegt, um es anschließend zu kompakten Ballen zu pressen. Zum Pressen werden beispielsweise Rundballenpressen verwendet, die das in den Schwaden abgelegte Erntegut aufnehmen und zu den Ballen verarbeiten.

Die Wegstrecke zwischen aufeinander folgenden Ablageorten der Ballen ist durch die aufgenommene Erntegutmenge bestimmt, die für einen Ballen einer definierten Größe durchschnittlich benötigt wird. Da die Fahrspuren in einem Feld aufgrund seiner Abmessungen in der Regel nicht einer Wegstrecke zwischen aufeinander folgenden Ablageorten entsprechen, und auch die Schwadgröße variieren kann, werden die Ballen über das gesamte Feld verteilt abgelegt. Der Aufwand zum Sammeln der Ballen auf ein Transportfahrzeug ist daher sowohl in Bezug auf die erforderliche Zeit als auch die benötigte Leistung und/oder den Energieverbrauch groß.

Aus dem Stand der Technik ist es bekannt, an eine Rundballenpresse einen Ballensammelwagen anzuhängen, mit dem wenigstens ein oder mehrere Ballen gemeinsam zu einem Ablageort transportiert werden können, um sie zeitlich nah nacheinander und räumlich nah beieinander abzulegen. Dadurch sind die Ballen weniger verteilt auf dem Feld platziert und können effektiver, d. h. schneller eingesammelt werden, wobei der Energieverbrauch aufgrund der verringerten zurückgelegten Fahrstrecke zudem verringert ist.

Die Druckschrift EP 3 298 882 B1 offenbart beispielsweise eine Rundballenpresse mit einer an diese angehängten Wickeleinrichtung. Um den Aufwand zum Sammeln der Ballen zu verringern, schlägt die Druckschrift vor, einen ersten gepressten Ballen auf der Wickeleinrichtung zu tragen, bis ein nachfolgender zweiter Ballen nahezu fertig gepresst ist, um die beiden Ballen zeitlich nah aufeinanderfolgend ablegen zu können, so dass sie räumlich nah beieinander auf dem Feldboden abgelegt werden, wobei die Rundballenpresse durchgängig vorwärtsfährt. Die Wickeleinrichtung wird dabei zum Transport des ersten Ballens genutzt.

Aus dem Stand der Technik bekannte Ballensammelwagen weisen eine Trageinrichtung auf, die zum Transport wenigstens eines Ballens vorgesehen ist. Die Ballen werden von der Auswurföffnung der Ballenpresse ausgehend über eine Förderfläche, beispielsweise mittels einer aktiven Fördervorrichtung oder einer Rampe, auf die Trageinrichtung des Ballensammelwagens gefördert. Damit der ausgeworfene Ballen das Schließen der Heckklappe der Ballenpresse nicht behindert, weisen solche Ballensammelwagen häufig eine verhältnismäßig lange Bauweise auf. Das Schließen der Heckklappe der Rundballenpresse kann dadurch jedoch nur zeitlich verzögert erfolgen, damit der Ballen die Heckklappe nicht behindert. Zudem bedarf ein aktives Fördern des Ballens auf die Trageinrichtung eine Leistung, durch die der Kraftstoffverbrauch der Antriebsmaschine erhöht ist.

Aufgabe der vorliegenden Erfindung ist es, einen Ballensammelwagen zu schaffen, der ein sehr schnelles Ablegen von Ballen ermöglicht, ohne während der Ballenablage die Arbeitsprozesse der Rundballenpresse zu behindern, und wobei der Ballensammelwagen zudem eine weiter optimierte Ballenablage ermöglicht, so dass das Einsammeln der Ballen effizienter erfolgen kann.

Die Aufgabe wird gelöst mit einem Ballensammelwagen mit den Merkmalen des unabhängigen Patentanspruchs 1, einem Arbeitszug mit den Merkmalen des unabhängigen Patentanspruchs 13, sowie einem Verfahren mit den Merkmalen des unabhängigen Patentanspruchs 14. Vorteilhafte Ausführungsformen sind den abhängigen Ansprüchen entnehmbar.

Dafür wird ein Ballensammelwagen geschaffen. Der Ballensammelwagen ist zum Anhängen an eine Rundballenpresse und zum Transportieren eines Ballens vorgesehen. Der Ballen ist aus Erntegut, beispielsweise aus Stroh oder Heu, gepresst.

Der Ballensammelwagen weist eine Trageinrichtung zum Tragen des Ballens auf, die zum Aufnehmen des Ballens in eine Ladestellung verstellbar ist, zum Transport des Ballens in eine Transportstellung verstellbar ist, und zur Abgabe des Ballens auf einen Feldboden in eine Abladestellung verstellbar ist.

Weiterhin weist der Ballensammelwagen zwei Räder auf. Mit den Rädern wird der Ballensammelwagen über den Feldboden geführt und stützt sich von diesem ab.

Der Ballensammelwagen zeichnet sich dadurch aus, dass die Trageinrichtung in eine erste Raumrichtung gesehen auf Höhe von oder unterhalb einer Radachse eines Rades des Ballensammelwagens gelagert ist, und/oder dass die Trageinrichtung zwischen den beiden Rädern des Ballensammelwagens angeordnet ist. Dabei ist die erste Raumrichtung in ebenem Gelände bevorzugt die vertikale Richtung.

Da die Trageinrichtung zwischen den beiden Rädern des Ballensammelwagens angeordnet ist, und/oder die Lagerung der Trageinrichtung des Ballensammelwagens in der ersten Raumrichtung auf Höhe von oder unterhalb der Radachse angeordnet ist, ist ein Abstand der Trageinrichtung oder der Lagerung der Trageinrichtung zum Feldboden gering. Ein in die Trageinrichtung aufgenommener Ballen ist dadurch zwischen den Rädern angeordnet. Vorzugsweise erstreckt er sich wenigstens teilweise auf Höhe von oder sogar unterhalb der Radachse. Durch diese vorteilhaft tiefe Lage der Trageinrichtung kann die Heckklappe bei in die Trageinrichtung aufgenommenem Ballen, insbesondere auch bei verhältnismäßig geringem Abstand der Trageinrichtung von der Rundballenpresse, geschlossen werden, ohne mit dem Ballen zu kollidieren. Aufgrund dessen kann der Ballensammelwagen kompakt gebaut sein.

Außerdem muss der Ballen beim Verstellen der Trageinrichtung von der Ladestellung in die Transportstellung, und/oder von der Transportstellung in die Abladestellung, nur über eine geringe Distanz zum Feldboden angehoben oder abgesenkt werden. Aufgrund der kurzen dafür benötigten Wege wird nur wenig Leistung benötigt. Dadurch kann der Ballen sehr schnell auf- und abgeladen werden.

Bevorzugt umfasst die Trageinrichtung Haltestreben, die der Trageinrichtung Stabilität verleihen. Besonders bevorzugt weisen die Haltestreben ein Hohlprofil auf. Solche Haltestreben mit Hohlprofil sind herkömmliche Fertigungsbauteile, und daher kostengünstig beziehbar. Zudem sind sie aufgrund ihres Hohlprofils sehr leicht, so dass der Ballensammelwagen ein geringes Gewicht aufweist. Dadurch wird zum Ziehen des Ballensammelwagens nur wenig Kraftstoff benötigt. Alternativ oder zusätzlich kann die Trageinrichtung eine wenigstens bereichsweise geschlossene, durchgängige und/oder massive Tragfläche, bspw. aus einem Blech, aufweisen.

Um den Ballen seitlich zu führen, kann die Trageinrichtung weiterhin seitliche Haltestreben aufweisen. Die seitlichen Haltestreben begrenzen einen Aufnahmeraum der Trageinrichtung für den Ballen.

Die beiden Räder des Ballensammelwagens sind bevorzugt einzeln an einem Rahmen des Ballensammelwagens aufgehängt. In einer zweiten Raumrichtung, die sich quer zur ersten Raumrichtung erstreckt, sind die Räder bevorzugt seitlich der Trageinrichtung angeordnet. Die Einzelradaufhängung hat den Vorteil, dass der Ballensammelwagen keine durchgängige Radachse aufweist. Die Räder sind stattdessen bevorzugt an Bolzen befestigt. Eine gedachte Verbindung der Bolzen bildet eine fiktive Radachse, um die die Räder drehbar sind. Durch die Einzelradaufhängung ist zwischen den Rädern genug Freiraum für die Anordnung der Trageinrichtung vorhanden, so dass diese auf Höhe von oder sogar unterhalb der Radachse lagerbar ist. Die seitlichen Haltestreben begrenzen den Aufnahmeraum der Trageinrichtung für den Ballen so, dass dieser die Räder nicht behindern kann.

Der Rahmen des Ballensammelwagens ist bevorzugt etwa U- förmig ausgebildet. Er weist weiterhin bevorzugt zwei Außenträger auf, die durch einen Querträger miteinander verbunden sind. In einer bevorzugten Ausführungsform erstrecken sich die Außenträger etwa in einem rechten Winkel zum Querträger. Prinzipiell können sie sich aber auch in einem stumpfen Winkel zum Querträger erstrecken, beispielsweise in einem Winkel größer als 90° und kleiner als 150°. Die Außenträger weisen vorzugsweise wenigstens bereichsweise eine Erstreckungskomponente in Ablagerichtung auf, wobei sich der Querträger in die zweite Raumrichtung, insbesondere unterhalb der Trageinrichtung, erstreckt. Um die Räder am Rahmen zu befestigen, ist es weiterhin bevorzugt, dass am Rahmen für jedes Rad jeweils ein auskragender Haltearm vorgesehen ist, an dem das ihm zugeordnete Rad aufgehängt ist.

An einem offenen Ende jedes der Haltearme ist bevorzugt jeweils ein Radlager angeordnet, in dem die Radaufhängung des ihm zugeordneten Rades um eine Fahrwerksachse drehbar aufgehängt ist. Dabei erstreckt sich die Fahrwerksachse in die erste Raumrichtung. Dadurch sind die Räder jeweils relativ zu dem ihm zugeordneten Haltearm drehbar.

Die Trageinrichtung ist an wenigstens einem Drehlager, vorzugsweise einem Gummilager, einem Kugelgelenklager oder einem Wälzlager, um eine Halteachse in und gegen eine Schwenkrichtung dreh- oder schwenkbar gelagert. Dadurch ist die Trageinrichtung von der Ladestellung in die Transportstellung, und von der Transportstellung in die Abladestellung, und wieder zurück dreh- oder schwenkbar. Das Drehlager ist dafür bevorzugt an einer Haltestrebe der Trageinrichtung befestigt, besonders bevorzugt angeschweißt. In einer alternativen Ausführung ist ein Drehen oder Schwenken der Trageinrichtung auch über eine Kulisse realisierbar.

Das Drehlager ist in einer bevorzugten Ausführungsform über die korrespondierenden Bolzen an dem Querträger befestigt, so dass die Trageinrichtung in der ersten Raumrichtung gesehen oberhalb des Querträgers angeordnet ist. Dadurch ist der Querträger unterhalb der Halteachse angeordnet. Er nimmt die vom Ballen verursachten Lasten auf. Besonders bevorzugt ist die Trageinrichtung an zwei voneinander beabstandeten Drehlagern dreh- oder schwenkbar gelagert. Dadurch kann die Belastung besser, insbesondere symmetrisch, verteilt werden.

In Transportstellung ist die Trageinrichtung bevorzugt oberhalb des Querträgers angeordnet. Durch Drehen oder Schwenken der Trageinrichtung in die Schwenkrichtung ist sie in Ladestellung auf eine der Rundballenpresse zugewandte Seite, und durch Drehen oder Schwenken gegen die Schwenkrichtung ist sie in Abladestellung auf eine der Rundballenpresse abgewandte Seite drehbar oder schwenkbar.

In einer bevorzugten Ausführungsform umfasst der Ballensammelwagen wenigstens einen Aktor, mit dem die Trageinrichtung drehbar oder schwenkbar ist. Der Aktor ist bevorzugt als ein hydraulischer, pneumatischer, elektrischer oder elektrohydraulischer Aktor ausgebildet. Vorteilhaft ist er als einfachwirkender Hydraulikzylinder ausgebildet, der zum Verstellen der Trageinrichtung von der Abladestellung in die Transportstellung und/oder von der Transportstellung in die Ladestellung, vorgesehen ist. Der Ballensammelwagen dieser Ausführungsform weist bevorzugt ein Rückstellmittel, beispielsweise eine Feder, zum Zurückstellen der Trageinrichtung, aus der Ladestellung in die Transportstellung und/oder von der Transportstellung in die Abladestellung, auf.

Alternativ kann aber auch ein zweifachwirkender Zylinder verwendet werden, der sowohl für das Verstellen der Trageinrichtung von der Ladestellung in die Transportstellung und von der Transportstellung in die Abladestellung, als auch von der Abladestellung in die Transportstellung und von der Transportstellung in die Ladestellung zurück vorgesehen ist. In dieser Ausführungsform wird kein Rückstellmittel zum Zurückstellen der Trageinrichtung benötigt.

Vorzugsweise weist der Ballensammelwagen einen Sensor auf, der dazu eingerichtet ist, zu erfassen, ob der Ballen in der Trageinrichtung angeordnet ist. Dadurch werden undefinierte Betriebszustände vermieden, die auftreten könnten, wenn der Ballen, beispielsweise nach Ablauf einer vorgegebenen Auswurfzeit, noch nicht vollständig ausgeworfen ist.

Der Ballensammelwagen weist bevorzugt eine Deichsel auf, welche außenliegende Zugstangen umfasst. Dadurch kann der Ballen zwischen die Zugstangen abgelegt werden, und wird beim Laden in die Trageinrichtung durch die Zugstangen seitlich geführt. Durch diese Anordnung kann der Ballen beim Ablegen aus der Rundballenpresse nicht seitlich ausbrechen.

Bevorzugt weist die Deichsel ein zentrales Kugelauge und/oder wenigstens eine seitliche Zug- und/oder Druckstrebe zum Anlenken des Ballensammelwagens an die Rundballenpresse auf. Das Kugelauge ist dabei bevorzugt, insbesondere mittig, an einer die außenliegenden Zugstanden verbindenden Querstange der Deichsel anordbar. Vorzugsweise ist es, beispielsweise mittels eines Bolzens, an einem Langloch der Rundballenpresse befestigbar oder befestigt. Dadurch können Verwindungen der Deichsel, beispielsweise beim Durchfahren von Bodenunebenheiten, verhindert werden. Um sicherzustellen, dass der Ballensammelwagen der Rundballenpresse in ihrer Fahrspur folgt, kann die wenigstens eine Zug- und/oder Druckstrebe, insbesondere am Rahmen der Rundballenpresse, weiter insbesondere seitlich, befestigt werden. Vorteilhaft sind zwei Zug- und/oder Druckstreben an der Deichsel vorgesehen, die jeweils an gegenüberliegenden Seiten des Rahmens der Rundballenpresse, insbesondere symmetrisch, an diese anbindbar sind. Bei Nutzung von zwei symmetrisch angeordneten Zug- und/oder Druckstreben wird erzwungen, dass der Ballensammelwagen fluchtend hinter der Rundballenpresse herfährt. Prinzipiell ist der Ballensammelwagen jedoch auch nur über das Kugelauge, oder alternativ über einen Kugelkopf, an die Rundballenpresse anlenkbar.

Die Aufgabe wird weiterhin gelöst mit einem Arbeitszug umfassend eine Rundballenpresse und einen solchen Ballensammelwagen. Die Rundballenpresse kann dabei als selbstfahrende Rundballenpresse ausgebildet sein, und zum Antrieb des Ballensammelwagens eingerichtet sein. Es ist aber auch eine Ausführungsform bevorzugt, bei der der Arbeitszug einen Schlepper umfasst. In dieser Ausführungsform ist die Rundballenpresse an den Schlepper angehängt. Vorzugsweise wird sie, insbesondere mittels einer Zapfwelle und Energiekupplungen, vom Schlepper aus angetrieben. Ein Antrieb des Ballensammelwagens kann prinzipiell sowohl vom Schlepper aus als auch von der Rundballenpresse aus erfolgen.

Die Aufgabe wird weiterhin gelöst mit einem Verfahren zum Entladen eines ersten und eines zweiten Ballens aus einer Rundballenpresse eines solchen Arbeitszuges auf einen Feldboden, wobei die Rundballenpresse eine Presskammer zum Pressen von Ballen, insbesondere eines ersten Ballens und eines nach diesem gepressten zweiten Ballens, umfasst, wobei der Ballensammelwagen an die Rundballenpresse angehängt ist, und eine Trageinrichtung umfasst, die während der Bildung des zweiten Ballens zum Tragen des ersten Ballens vorgesehen ist, wobei die Ballen an derselben Abladeposition von der Rundballenpresse abgelegt werden, und wobei der zweite Ballen beim Abladen gegen den ersten Ballen gedrückt wird.

Da die Ballen beim Ablegen aneinander reiben, verhaken sie sich miteinander. Dadurch liegen die Ballen, auch wenn der Arbeitszug seine Fahrt fortsetzt, noch aneinander an. Da die Ballen unmittelbar aneinander liegen, können sie in demselben Arbeitsgang durch eine handelsübliche Aufnahmegabel von einem Schlepper aufgenommen und auf ein Transportfahrzeug abgelegt werden.

Da dabei zudem immer zwei Ballen unmittelbar nebeneinander abgelegt werden, liegen die Ballen nur an halb so vielen Ablageorten auf dem Feld verteilt. Das Einsammeln der Ballen kann entsprechend schneller erfolgen. Der beim Einsammeln zurückgelegte Fahrweg ist dadurch erheblich verringert, so dass sowohl der Kraftstoffverbrauch als auch die für den Erntevorgang erforderliche Zeit insgesamt erheblich verringert ist.

In einer bevorzugten Ausführungsform ist die Trageinrichtung von einer Transportstellung ausgehend durch Schwenken in eine Schwenkrichtung reversibel in eine Ladestellung, und von der Transportstellung ausgehend durch Schwenken gegen die Schwenkrichtung reversibel in eine Abladestellung schwenkbar, wobei das Verfahren die aufeinander folgenden Schritte umfasst:
- Tragen des ersten Ballens in der Trageinrichtung, wobei sich die Trageinrichtung in der Transportstellung befindet, während die Rundballenpresse einen nachfolgenden zweiten Ballen bildet;
- Starten einer Bindung des zweiten Ballens;
- Ablegen des ersten Ballens auf den Feldboden durch Verschwenken der Trageinrichtung von der Transportstellung in die Abladestellung;
- Schwenken der Trageinrichtung von der Abladestellung in die Ladestellung;
- Auswerfen des zweiten Ballens aus der Rundballenpresse;
- Aufnehmen des zweiten Ballens in die Trageinrichtung;
- Ablegen des zweiten Ballens auf den Feldboden durch Verschwenken der Trageinrichtung von der Ladestellung in die Abladestellung; und
- Schwenken der Trageinrichtung von der Abladestellung in die Transportstellung; wobei der zweite Ballen beim Zurückschwenken der Trageinrichtung von der Abladestellung in die Transportstellung gegen den ersten Ballen gedrückt wird.

Der zweite Ballen tendiert dazu, beim Ablegen aus der Trageinrichtung in dieselbe Position zu rollen, in die der erste Ballen abgelegt ist. Dabei rollt er gegen den ersten Ballen. Beim Zurückschwenken der Trageinrichtung wird die in Fahrtrichtung letzte (vierte) Haltestrebe gegen den zweiten Ballen, und dieser dadurch gegen den ersten Ballen gedrückt. Die Ballen liegen dadurch im Regelfall unmittelbar aneinander an.

Die Rundballenpresse hält während der Bindung des zweiten Ballens an, vorzugsweise bis der zweite Ballen abgelegt, und die Trageinrichtung in die Transportstellung zurückgeschwenkt ist. Zum Ablegen des zweiten Ballens wird die Trageinrichtung von der Ladestellung unmittelbar in die Abladestellung verstellt, insbesondere ohne in der Transportstellung zu verharren. Zudem umfasst der Ballensammelwagen eine Sensorik, die das Vorhandensein des Ballens in der Trageinrichtung erfasst. Dadurch kann das Verfahren sehr schnell durchgeführt werden. Der Arbeitsprozess muss trotz des Stillstandes der Rundballenpresse daher nur sehr kurzzeitig unterbrochen werden.

Vorzugsweise umfasst die Rundballenpresse eine Steuerungseinheit, die dem Schlepper und/oder dem Ballensammelwagen anzeigt, dass die Bindung eines der Ballen gestartet wird. Das Signal wird zum Verschwenken der Trageinrichtung von der Transportstellung in die Ladestellung genutzt. Da dem Schlepper der Start des Bindevorgangs ohnehin angezeigt wird, um sicherzustellen, dass dieser den Arbeitszug anhält, so dass kein weiteres Erntegut in die Rundballenpresse gefördert wird, kann der Ballensammelwagen ohne Änderungen an der Rundballenpresse betrieben werden.

Nach dem Ablegen des zweiten Ballens wird bei Vorwärtsfahrt der Rundballenpresse ein nachfolgender erster Ballen gebildet, der zur Ablage mit einem nachfolgenden zweiten Ballen an einer nachfolgenden Ablageposition vorgesehen ist. Nach dem Pressen und Binden dieses nachfolgenden ersten Ballens sowie seiner Aufnahme in die Trageinrichtung wiederholt sich das Verfahren.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) - (c) den Ballensammelwagen der Fig. 1 jeweils in einer perspektivischen Ansicht, und (d) den an die Rundballenpresse angehängten Ballensammelwagen der Fig. 1 (a) - (c) in einer weiteren perspektivischen Ansicht;
- Fig. 2: eine perspektivische Ansicht der Trageinrichtung des Ballensammelwagens der Fig. 1 und 3;
- Fig. 3: in (a) - (f) jeweils eine Seitenansicht einer Rundballenpresse, an die ein erfindungsgemäßer Ballensammelwagen angehängt ist, oder einen Ausschnitt davon, wobei (a) - (f) ein Verfahren zum Entladen eines ersten und eines zweiten Ballens aus einer Rundballenpresse eines Arbeitszuges auf einen Feldboden schematisch darstellen;
- Fig. 4: schematisch einen Arbeitszug umfassend einen Schlepper, eine Rundballenpresse und einen Ballensammelwagen.

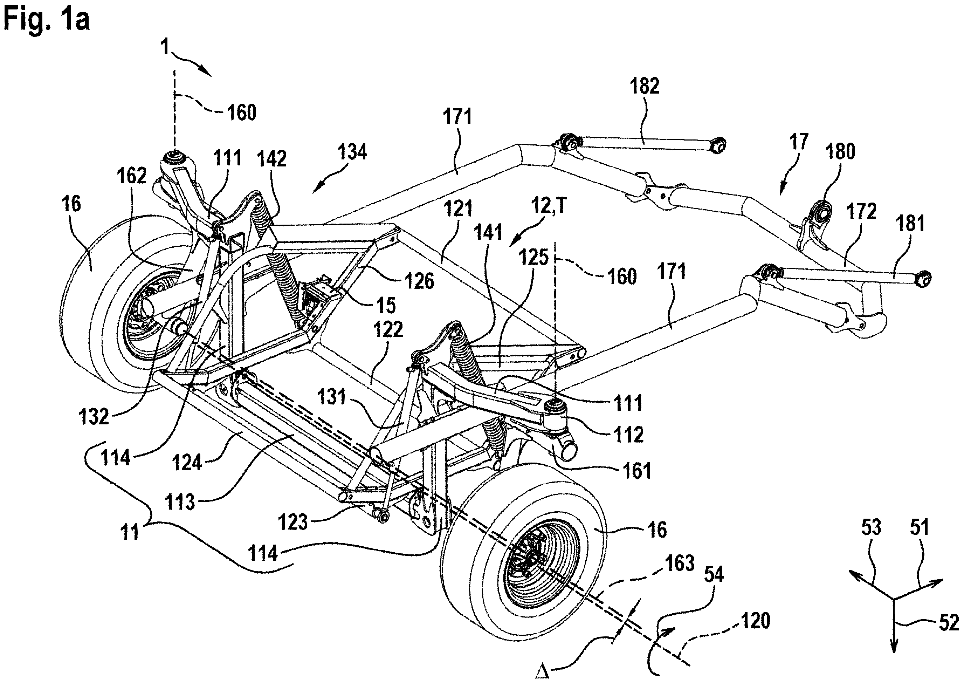

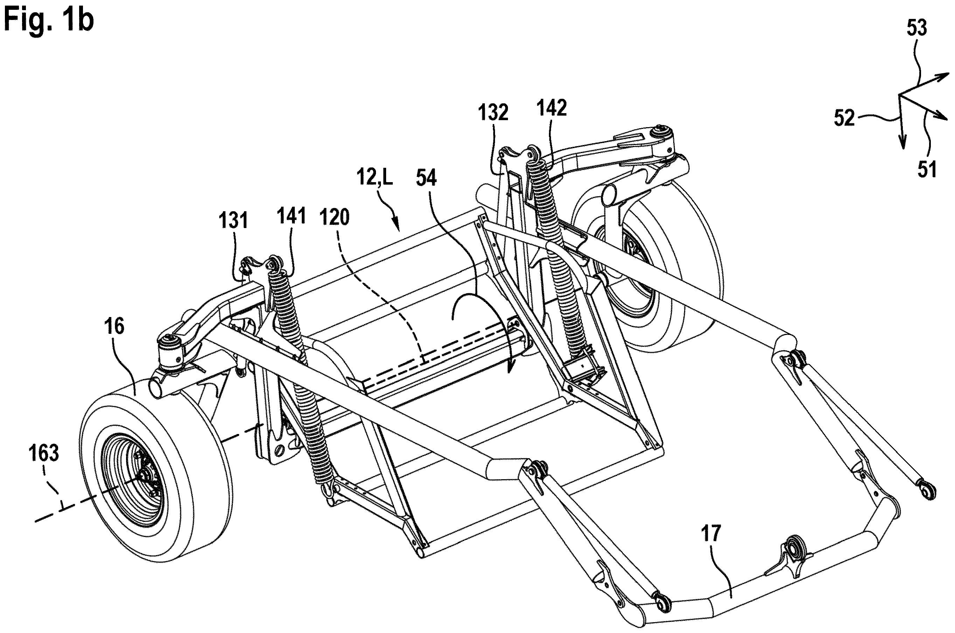

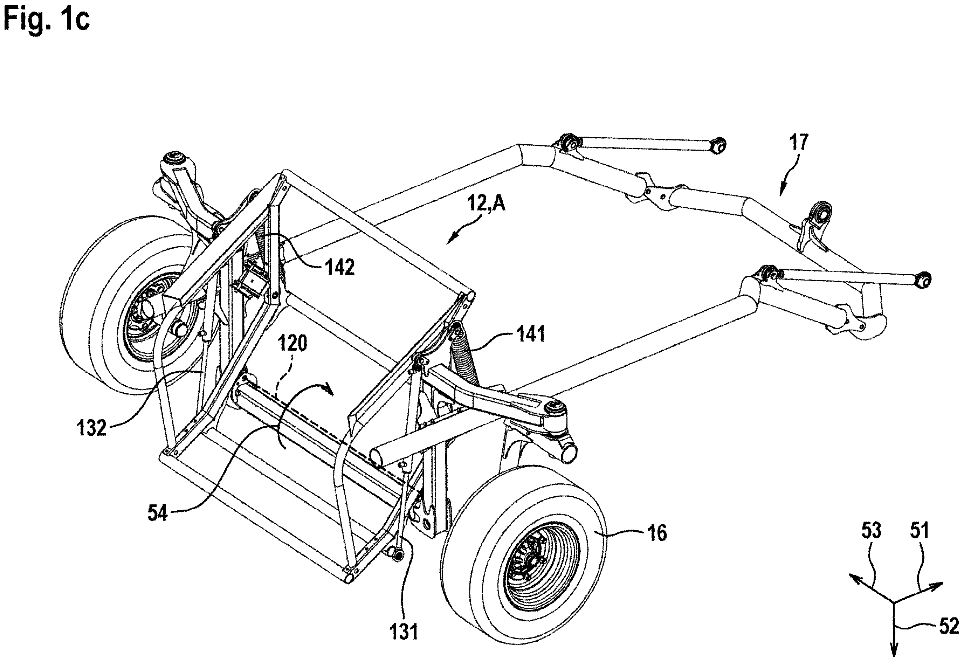

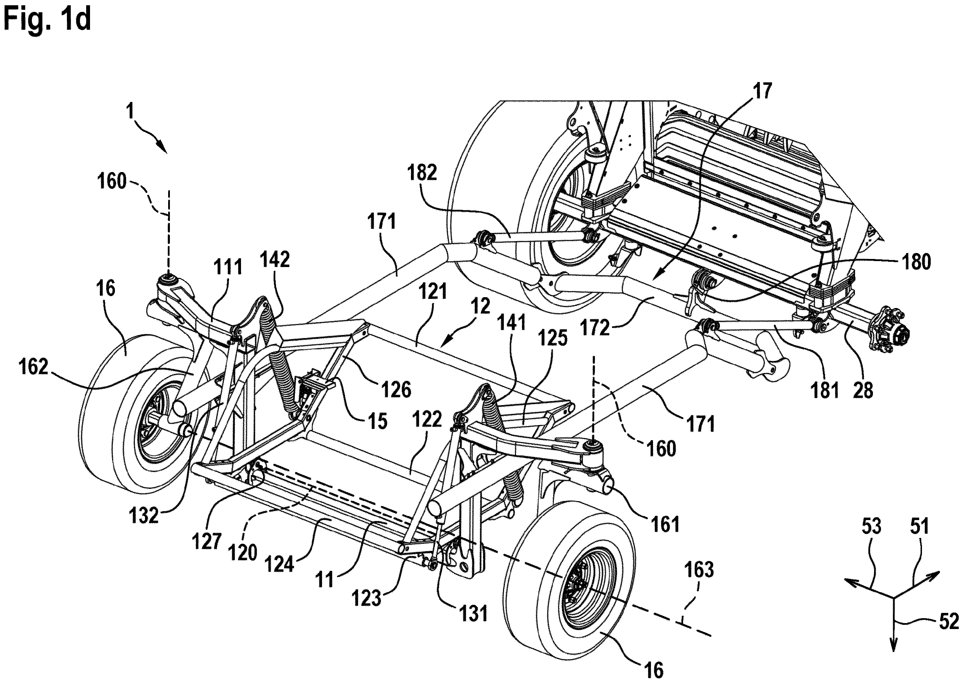

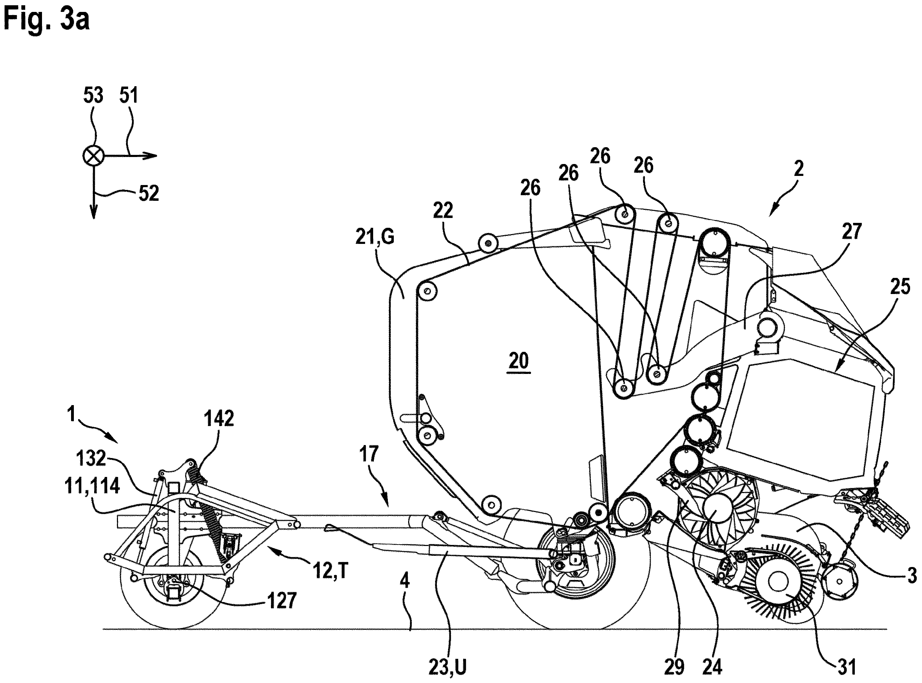

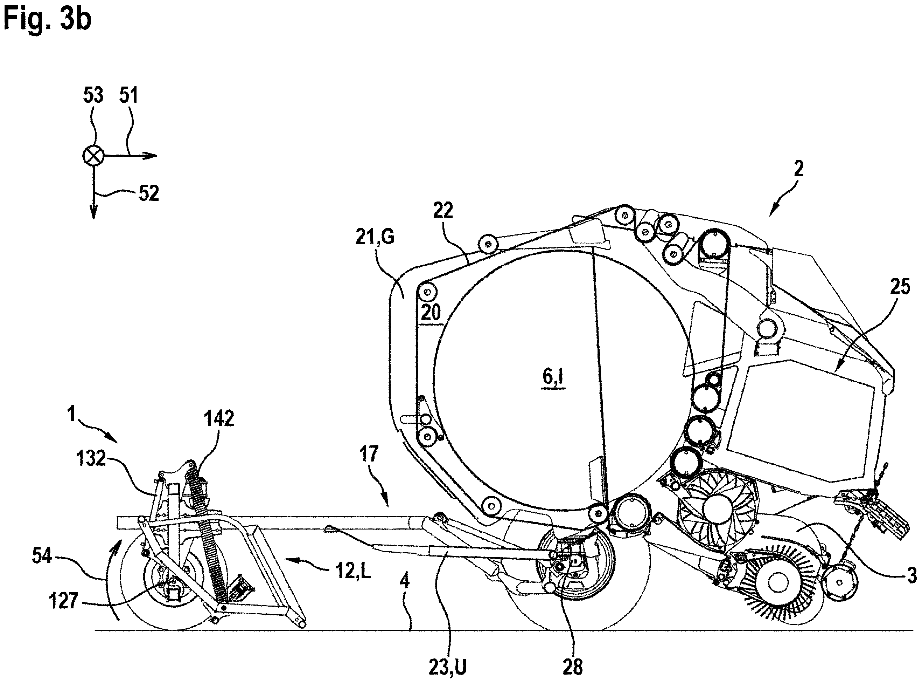

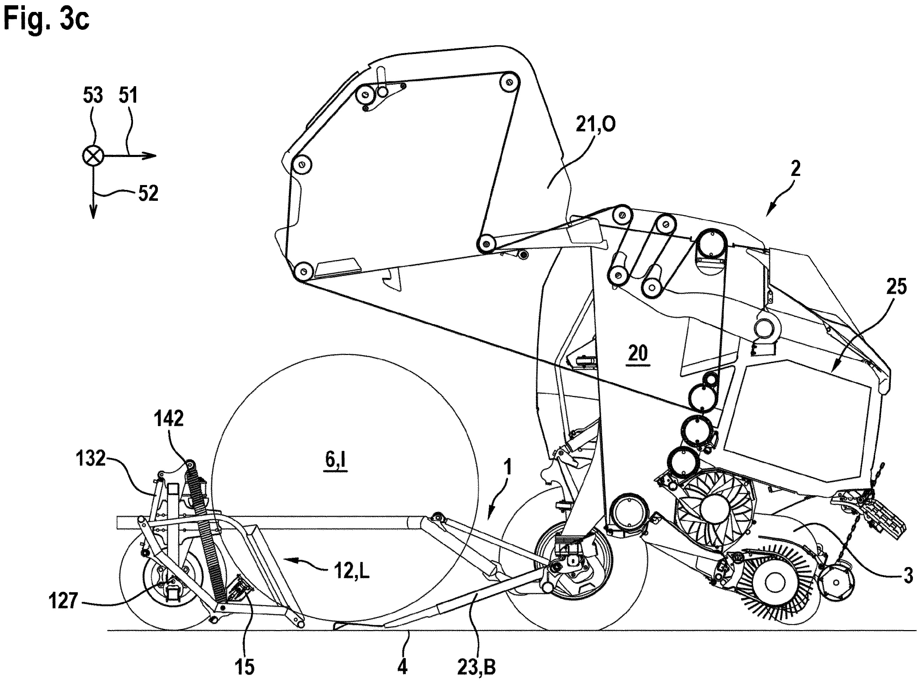

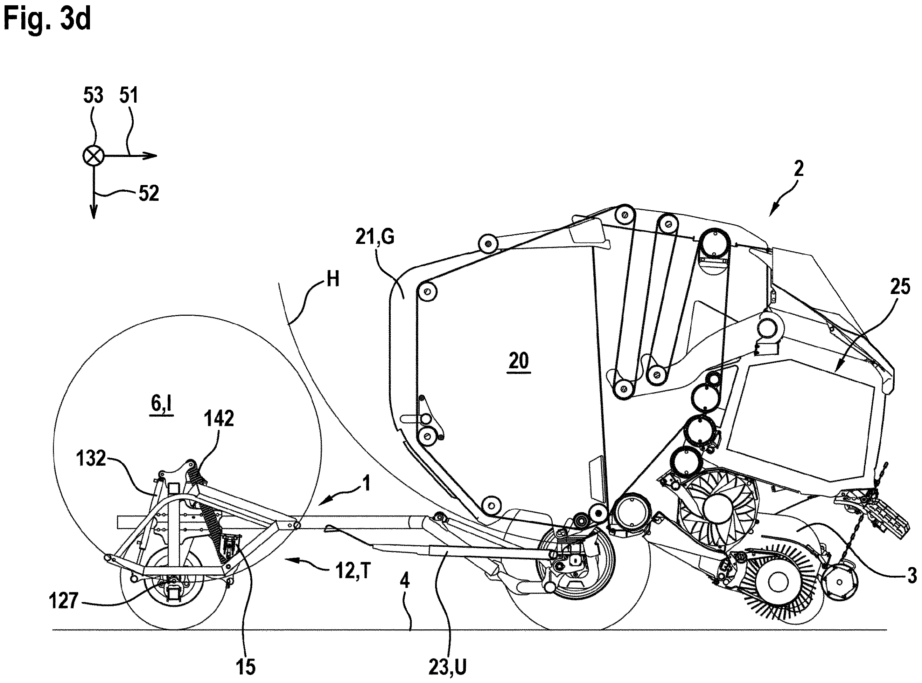

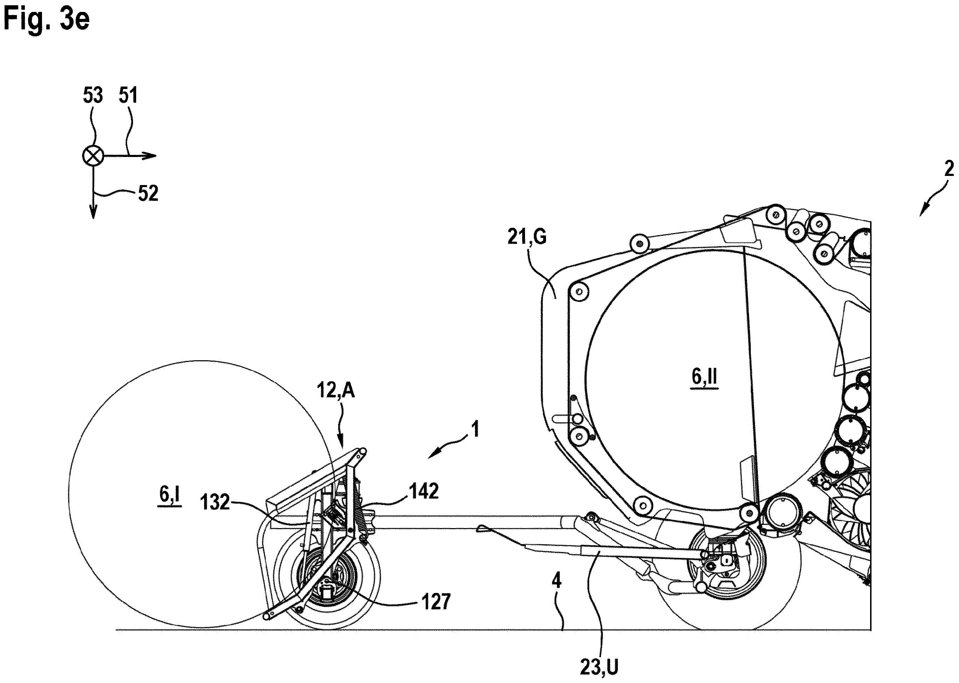

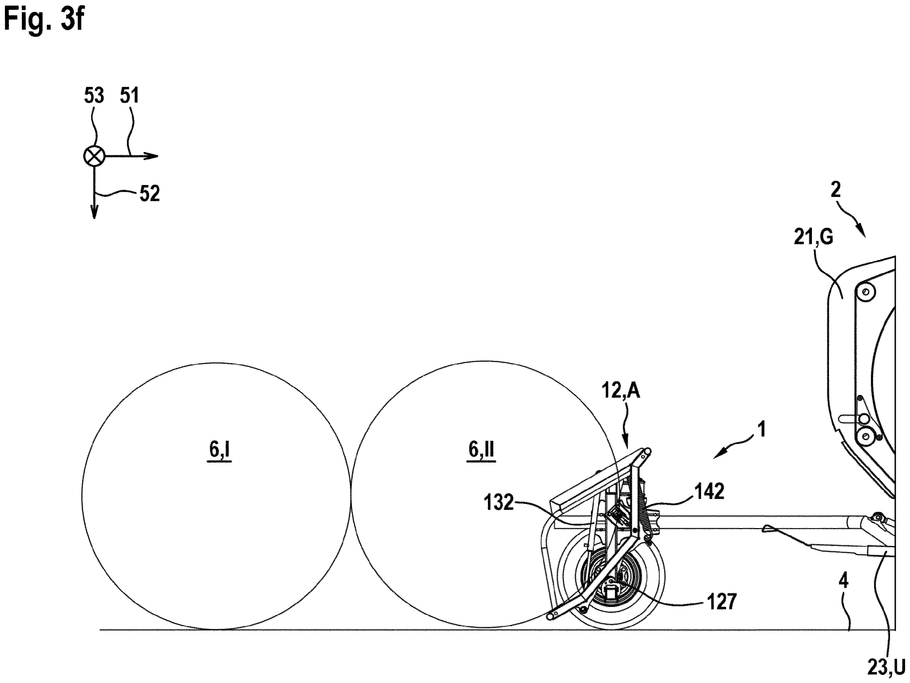

Fig. 1 zeigt in (a) - (c) den Ballensammelwagen 1 der Fig. 1 jeweils in einer perspektivischen Ansicht, und in (d) den an die Rundballenpresse 2 angehängten Ballensammelwagen 1 der Fig. 1 (a) - (c) in einer weiteren perspektivischen Ansicht. Im Folgenden wird der Ballensammelwagen 1 näher beschrieben. Die Rundballenpresse 2 wird im Rahmen der Fig. 3 erläutert.

Der Ballensammelwagen 1 ist zum Transportieren eines Ballens 6 vorgesehen. Er weist hier eine Trageinrichtung 12, einen Rahmen 11, Räder 16, umfassend einzelne Radaufhängungen 161, 162, sowie Aktoren 131, 132, Rückstellmittel 141, 142 und eine Deichsel 17 auf.

Zum Aufnehmen des Ballens 6 in den Ballensammelwagen 1 ist die Trageinrichtung 12 von einer Transportstellung T ausgehend durch Verschwenken in eine Schwenkrichtung 54 in eine Ladestellung L schwenkbar, zum Transport des Ballens 6 durch Verschwenken gegen die Schwenkrichtung 54 in die Transportstellung T zurück schwenkbar, und zur Abgabe des Ballens 6 auf einen Feldboden 4 von der Transportstellung T ausgehend durch Verschwenken gegen die Schwenkrichtung 54 in eine Abladestellung A schwenkbar. Durch Verschwenken in die Schwenkrichtung 54 kann sie von der Abladestellung A ausgehend in die Transportstellung T zurückgeschwenkt werden.

Die Trageinrichtung 12 ist aus einem Gerüst aus mehreren Haltestreben 121 - 126, hier beispielhaft sechs Haltestreben 121 - 126, hergestellt. Die Trageinrichtung 12 kann aber auch mehr oder weniger Haltestreben 121 - 126 aufweisen. Bei dem hier dargestellten Ballensammelwagen 1 sind vier der Haltestreben 121 - 126 quer zur Fahrtrichtung 51 angeordnet. Sie sind zum Tragen des Ballens 6 vorgesehen und halten ihn dafür nicht nur in eine erste, in ebenem Gelände vertikale, Raumrichtung 52. Sondern in der ersten Raumrichtung 52 gesehen sind die inneren der vier Haltestreben 121 - 124 tiefer angeordnet als die äußeren der vier Haltestreben 121 - 124. Dadurch sorgen diese Haltestreben 121-124 während des Transports für einen sicheren Halt des Ballens 6 in und gegen die Fahrtrichtung 51. Die vier quer zur Fahrtrichtung 51 angeordneten Haltestreben 121 - 124 sind an ihren gegenüberliegenden Enden (nicht bezeichnet) jeweils durch eine untere Haltestrebe 126 miteinander verbunden. Weiterhin ist jeweils eine obere, bogenförmige, hier nahezu L-förmige, Haltestrebe 125 an der unteren Haltestrebe 126 befestigt. Sowohl die untere seitliche Haltestrebe 126 als auch die obere seitliche Haltestrebe 125 geben der Trageinrichtung 12 die nötige Stabilität und führen die Ballen 6 bei der Ladung wie auch bei der Ablage seitlich. Dadurch verhindern sie ein seitliches Ausbrechen des Ballens 6 aus der Trageinrichtung 12 sowie daraus entstehende Schäden am Ballensammelwagen 1.

Die Haltestreben 121 -126 weisen hier ein Hohlprofil auf. Dadurch weist die Trageinrichtung 12 ein geringes Gewicht auf. Das geringe Gericht wirkt sich positiv auf den Kraftstoffverbrauch während des Ziehens des Ballensammelwagens 1 aus. Dadurch ist auch der vom Ballensammelwagen auf den Boden ausgeübte Druck gering. Zudem sind zumindest die quer zur Fahrtrichtung 51 angeordneten Haltestreben 121 - 124 aus Rundprofilen gefertigt. Dadurch weisen sie keine Kanten auf, an denen der Ballen 6 aufscheuern kann. In anderen Ausführungsformen (nicht gezeigt) können die Haltestreben 121 - 126 auch andere Profile aufweisen oder gar aus Vollmaterial gefertigt sein.

Weiter umfasst die Trageinrichtung 12 einen Sensor 15 zur Erfassung des in der Trageinrichtung 12 angeordneten Ballens 6. Der Sensor 15 ist hier an der unteren Haltestrebe 126 befestigt. Er ist als Näherungssensor ausgebildet. Er kann aber beispielsweise auch als Drucksensor, Lichtsensor oder Ultraschallsensor ausgebildet sein. Weiterhin kann der Sensor 15 auch an anderen Bauteilen, insbesondere anderen Haltestreben 121 - 126, des Ballensammelwagens 1 befestigt sein. Außerdem können weitere Sensoren (nicht dargestellt) vorgesehen sein, beispielsweise um die Stellung L, T, A der Trageinrichtung 12 zu erfassen, oder ob der Ballen 6 abgelegt wurde. Die weiteren Sensoren können das Aufnehmen des Ballens 6 und/oder das Ablegen des Ballens 6 beschleunigt ermöglichen.

Die Aktoren 131, 132 und Rückstellmittel 141, 142 sind zum Schwenken der Trageinrichtung 12 vorgesehen. Dafür sind an der Trageinrichtung 12 Anbindungen 128, 129 für die Aktoren 131, 132 und die Rückstellmittel 141, 142 angeordnet, an denen diese einenends angeschlossen sind. Anderenends sind die Aktoren 131, 132 und Rückstellmittel 141, 142 am Rahmen 11 des Ballensammelwagens 1 befestigt.

Weiterhin ist an die unteren Haltestreben 126 jeweils ein Drehlager 127 befestigt, insbesondere angeschweißt. In der dargestellten Ausführungsform werden im Maschinenbau übliche Kugelgelenklager verwendet. Es können alternativ auch andere herkömmliche Lager, wie beispielsweise Wälzlager oder Gummilager, verwendet werden. Die Drehlager 127 sind zum schwenkbaren Lagern der Trageinrichtung 12 am Rahmen 11 des Ballensammelwagens 1 vorgesehen.

Der Rahmen 11 des Ballensammelwagens 1 ist etwa U-förmig ausgebildet. Er umfasst zwei sich in die erste Raumrichtung 52 erstreckende außenliegende Außenträger 114, welche einenends, insbesondere rechtwinkelig, mit einem sich in der zweiten Raumrichtung 53 erstreckenden Querträger 113 verbunden sind. An den Außenträgern 114 ist nahe des Querträgers 113 jeweils ein zu den Drehlagern 127 der Trageinrichtung 12 korrespondierender Bolzen (nicht bezeichnet) angeschweißt. Im montierten Zustand ist jeweils eines der Drehlager 127 an einem der Bolzen drehbar angeordnet. Die Bolzen bilden so eine in die zweite Raumrichtung 53 ausgerichtete, fiktive Halteachse 120, um die die Trageinrichtung 12 in und gegen die Schwenkrichtung 54 schwenkbar ist.

Der Ballensammelwagen 1 weist zwei Räder 16 auf. Die Räder 16 sind über Radaufhängungen 161,162 einzeln und in der zweiten Raumrichtung 53 seitlich der Trageinrichtung 12 aufgehängt. Dafür weist der Rahmen 11 Haltearme 111 auf, die sich in beziehungsweise gegen die zweite Raumrichtung 53 auskragend erstrecken. Dadurch ist jeweils eine Radaufhängung 161, 162 seitlich der Trageinrichtung 12 angeordnet. Durch am offenen Ende der Haltearme 111 angeordnete Radlager 112, an denen die Radaufhängungen 161, 162 gelagert sind, sind die Räder 16 jeweils um die Fahrwerkachsen 160 der Radlager 112 drehbar. Durch die einzelnen Radaufhängungen 161, 162 der Räder 16 des Ballensammelwagens 1 weist dieser keine durchgängige Radachse 163 auf. Die Räder 16 sind stattdessen an Radbolzen (nicht bezeichnet) befestigt. Bei etwa in Fahrtrichtung 51 ausgerichteten Rädern 16 bilden die Radbolzen eine in die zweite Raumrichtung 53 ausgerichtete fiktive Radachse 163, um die die Räder 16 drehbar sind. Durch diese Anordnung ist zwischen den Rädern 16 genug Bauraum für die Anordnung der Trageinrichtung 12 vorhanden.

Zum Schwenken der Trageinrichtung 12 verfügt der Ballensammelwagen 1 über die Aktoren 131, 132. Diese sind hier als hydraulische Aktoren ausgebildet. Es können aber auch andere Aktoren 131, 132 aus dem Bereich des Maschinenbaus genutzt werden, wie beispielsweise pneumatische Aktoren, oder elektrische Aktoren wie Linearmotoren oder Spindeltriebe. Alternativ können auch Aktoren verschiedener Typen kombiniert werden. Die Aktoren 131, 132 bewirken das Schwenken der Trageinrichtung aus der Abladestellung A in die Transportstellung T und aus der Transportstellung T in die Ladestellung L.

Weiterhin weist die Trageinrichtung 12 die Rückstellmittel 141, 142 auf. Diese sind beispielsweise als Federn ausgebildet und bewirken das Zurückstellen der Trageinrichtung in die Transportstellung T bzw. die Abladestellung A. Als Alternative zu Federn als Rückstellmittel können auch beispielsweise Gaszylinder verwendet werden (nicht gezeigt).

In einer weiteren Ausführungsform (nicht gezeigt) kann auf ein Zusammenwirken von den Aktoren 131, 132 mit den Rückstellmitteln 141, 142 verzichtet werden, indem die einfachwirkenden Aktoren 131, 132 durch doppelwirkende Aktoren (nicht gezeigt) ersetzt werden und die doppelwirkenden Aktoren auch die Funktion der Rückstellmittel 141, 142 übernehmen.

Die Aktoren 131, 132 und Rückstellmittel 141, 142 sind jeweils an den dem Querträger 113 gegenüberliegenden Ende (nicht bezeichnet) der Außenträger 114 befestigt.

Außerdem verfügt der Ballensammelwagen über eine Deichsel 17, welche zwei außenliegende, seitlich am Rahmen 11 angeordnete, sich wenigstens bereichsweise in Fahrtrichtung 51 erstreckende Zugstangen 171, umfasst, die über eine, sich wenigstens bereichsweise in die zweite Raumrichtung 53 erstreckende Querstange 172 verbunden sind. Die Anordnung der außenliegenden Zugstangen 171, sorgt für ein seitliches Führen des Ballens 6 beim Auswerfen des Ballens 6 aus der Rundballenpresse 2, und beim Laden des Ballens 6 in die Trageinrichtung 12. Dadurch kann der Ballen 6 nicht seitlich ausbrechen.

Der Querträger 113 des Rahmens 11 des Ballensammelwagens 1 ist in der ersten Raumrichtung 52 gesehen unterhalb der Halteachse 120 und der Radachse 163 angeordnet. Er weist daher einen nur geringen Abstand zum Feldboden 4 auf. Zudem ist die Halteachse 120, um die die Trageinrichtung 12 schwenkbar ist, möglichst nah am Querträger 113 angeordnet. Dadurch ist die Trageinrichtung 12 in die erste Raumrichtung 52 gesehen unterhalb der Radachse 163 des Ballensammelwagens 1 gelagert. Dies ist in Fig. 1 (a) schematisch durch einen Abstand Δ zwischen der Halteachse 120 und der Radachse 163 dargestellt.

Durch diese tiefe Anordnung kann eine Heckklappe 21 der Rundballenpresse 2 bereits während der Aufnahme des Ballens 6 in den Ballensammelwagen 1 geschlossen werden, ohne mit den Ballen 6 zu kollidieren. Gleichzeitig kann der Ballensammelwagen 1 dadurch sehr kompakt gebaut sein, so dass ein Abstand (nicht bezeichnet) zwischen der Trageinrichtung 12 und der Rundballenpresse 2 nur gering ist. Außerdem muss der Ballen 6 beim Verstellen der Trageinrichtung 12 von der Ladestellung L in die Transportstellung T, und/oder von der Transportstellung T in die Abladestellung A nur über eine sehr geringe Distanz vom Feldboden 4 angehoben oder zum Feldboden 4 abgesenkt werden. Aufgrund der kurzen dafür benötigten Wege wird nur wenig Leistung benötigt. Zudem ermöglicht diese Anordnung ein sehr schnelles Auf- und Abladen des Ballens 6.

Fig. 1 (a) zeigt die Trageinrichtung 12 des Ballensammelwagens 1 in der Transportstellung T. In der Transportstellung T sind Kolbenstangen der Aktoren 131, 132 etwa halb expandiert. Dadurch sind die Rückstellmittel 141, 142 leicht gespannt.

Fig. 1 (b) zeigt die Trageinrichtung 12 in der Ladestellung L. In der Ladestellung L ist die Trageinrichtung 12 in Schwenkrichtung 54 verschwenkt. Dadurch ist die erste Haltestrebe 121 der Trageinrichtung 12 an einer der Rundballenpresse 2 zugewandten Seite (nicht bezeichnet) des Ballensammelwagens 1 am Feldboden 4 abgelegt, oder zumindest nahe des Feldbodens 4 angeordnet, so dass der von der Rundballenpresse 2 ausgeworfene Ballen 6 in die Trageinrichtung 12 rollen kann. Das Verschwenken der Trageinrichtung 12 in die Ladestellung L erfolgt über den Einzug der Kolbenstangen der Aktoren 131, 132, wobei die Rückstellmittel 141, 142 weiter gespannt werden, d. h. weiter expandieren.

Fig. 1 (c) zeigt die Trageinrichtung 12 in der Abladestellung A. In der Abladestellung A ist die Trageinrichtung 12 gegenüber der Transportstellung T gegen die Schwenkrichtung 54 verschwenkt. Dadurch ist die vierte Haltestrebe 124 der Trageinrichtung 12 an einer der Rundballenpresse 2 abgewandten Seite (nicht bezeichnet) des Ballensammelwagens 1 am Feldboden 4 abgelegt, oder zumindest nahe des Feldbodens 4 angeordnet, so dass der Ballen 6 beim Auswerfen aus der Trageinrichtung 12 herausrollen kann. Das Verschwenken der Trageinrichtung 12 in die Abladestellung A erfolgt über den Auszug der Kolbenstangen der Aktoren 131, 132, wobei die Rückstellmittel 141, 142 entspannt werden. Die Kräfte zum Expandieren der Kolbenstangen der Aktoren werden dabei über die Rückstellmittel 141, 142 zur Verfügung gestellt.

Fig. 1 (d) zeigt den an die Rundballenpresse 2 angehängten Ballensammelwagen 1. Die Deichsel 17 weist zum Anlenken des Ballensammelwagens 1 an die Rundballenpresse 2 ein zentral an der Querstange 172 befestigtes Kugelauge 180, sowie wenigstens eine, hier beispielhaft zwei, an den Zugstangen 171, befestigte Zug- und/oder Druckstreben 181, 182 auf. Mit dem Kugelauge 180 ist die Deichsel 17 an die Rundballenpresse 2 anhängbar. Die Zug- und/oder Druckstreben 181, 182 werden seitlich an dem Pressrahmen 28 der Rundballenpresse 2 befestigt.

Das zentral angeordnete Kugelauge 180 wird mittels eines Befestigungsbolzens (nicht gezeigt) an einem Langloch (nicht gezeigt) am Pressrahmen 28 der Rundballenpresse 2 befestigt. Diese Anordnung ermöglicht ein Wanken des Ballensammelwagens 1 relativ zur Rundballenpresse 2. Die Befestigung verhindert Verwindungen der Deichsel 17, beispielweise beim Durchfahren von Bodenunebenheiten.

In dieser Ausführungsform werden zwei Zug - und Druckstreben 181, 182 an den beiden gegenüberliegenden Seiten des Pressrahmens 28 der Rundballenpresse 2 symmetrisch mit Hilfe von Bolzen befestigt. Dadurch sind der Ballensammelwagen 2 und die Rundballenpresse 2 fluchtend hintereinander ausgerichtet.

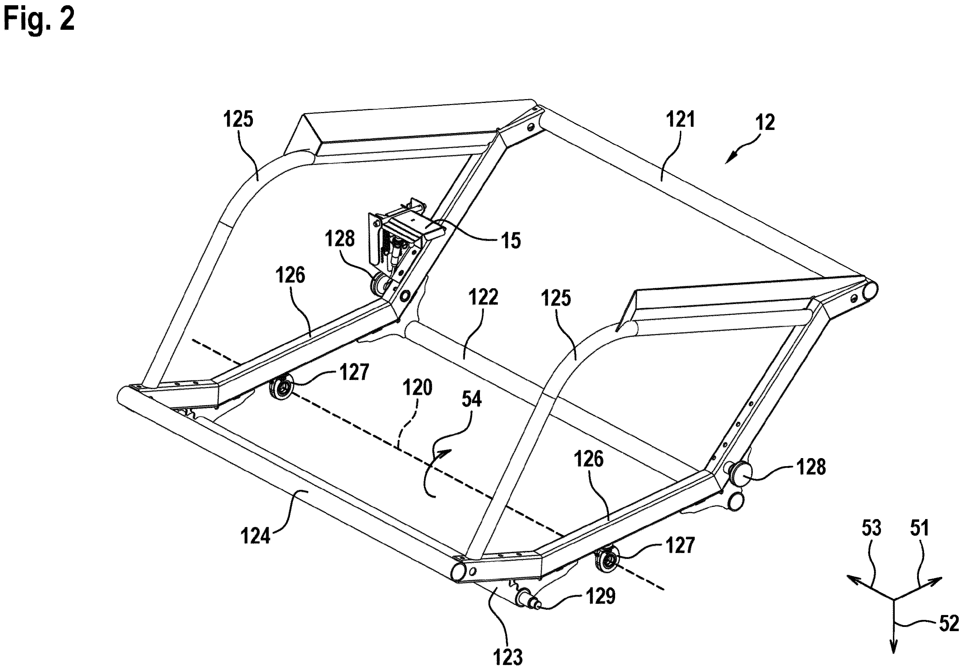

Fig 2 zeigt eine perspektivische Ansicht der Trageinrichtung 12 des Ballensammelwagens 1 der Fig. 1. Sichtbar sind die Haltestreben 121 - 126. Die beiden unteren, sich in Fahrtrichtung 51 erstreckenden Haltestreben 126 verbinden die sich quer zur Fahrtrichtung 51 erstreckenden Haltestreben 121 - 124. An einer Außenseite (nicht bezeichnet) der unteren Haltestreben 126 ist jeweils eine Anbindung 128 für die Rückstellmittel 141, 142 angeordnet. Die Anbindungen 129 für die Aktoren 131, 132 sind jeweils an Enden der dritten Haltestange 123 vorgesehen.

Der Sensor 15, mit dem erfasst wird, ob ein Ballen 6 in der Trageinrichtung 12 angeordnet ist oder nicht, ist hier als Näherungssensor ausgebildet und weist eine Metallplatte (nicht bezeichnet) auf, die beim Aufnehmen des Ballens verschwenkt wird. Alternativ können auch Ultraschallsensoren oder Lichtschranken genutzt werden oder andere Sensoren, die Anwendung im Maschinenbau finden.

Der Sensor 15 ist in Fahrtrichtung 51 vorne an der unteren Haltestrebe 126 angeordnet. Durch den Sensor 15 werden undefinierte Betriebszustände vermieden, die auftreten könnten, wenn der Ballen 6, beispielsweise nach Ablauf einer vorgegebenen Auswurfzeit, noch nicht vollständig ausgeworfen ist.

Weiter weist die Trageinrichtung 12 die beiden beabstandeten Drehlager 127 auf, welche in der ersten Raumrichtung 52 gesehen unterhalb der unteren Haltestreben 126 angeschweißt sind. Die Drehlager 127 sind zum Lagern der Trageinrichtung 12 am Rahmen 11 des Ballensammelwagens 1 vorgesehen. Eine Verbindung der Achsen der beiden Drehlager 127 verläuft entlang einer Halteachse 120, um welche die Trageinrichtung 12 in und gegen die Schwenkrichtung 54 schwenkbar ist.

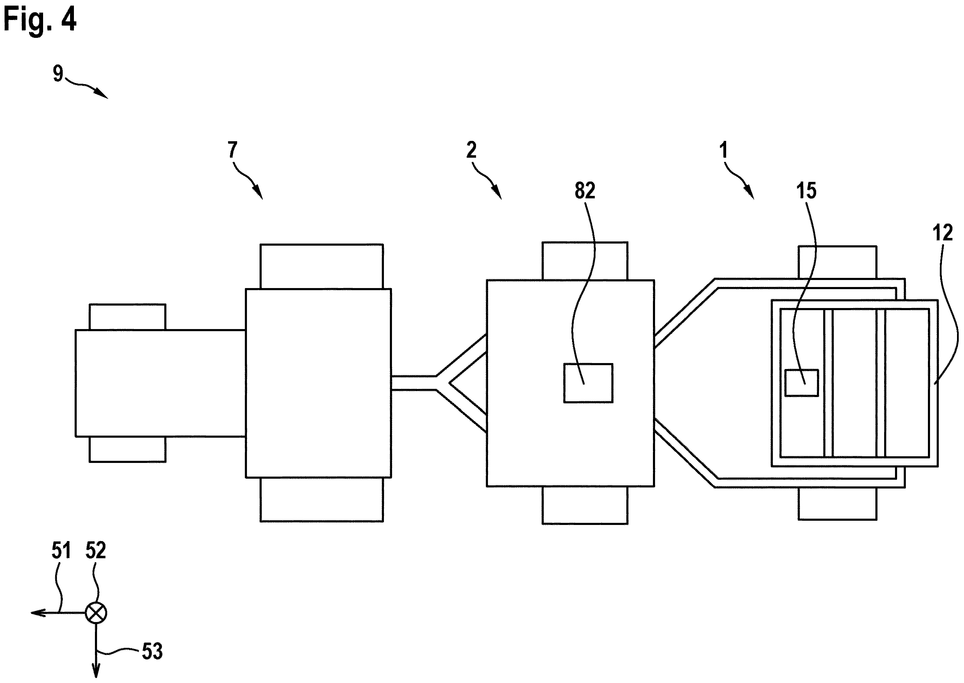

Fig. 3 zeigt in (a) - (f) jeweils eine Seitenansicht einer Rundballenpresse 2 eines Arbeitszuges 9 (s. Fig. 4), der einen Schlepper 7 (s. Fig. 4) umfasst, an den die Rundballenpresse 2 angehängt ist. An die Rundballenpresse 2 ist der Ballensammelwagen 1 der Fig. 1 und 2 angehängt. Der Ballensammelwagen 1 ist aber auch an eine selbstfahrende Ballenpresse (nicht gezeigt) anhängbar. Dabei zeigen die Fig. 3 (e) und (f) die Rundballenpresse 2 beziehungsweise den Ballensammelwagen 1 nur teilweise.

Die Fig. 3 (a) - (f) stellen ein Verfahren zum Entladen eines ersten Ballens 6, I und eines zweiten Ballens 6, II aus der Rundballenpresse 2 auf einen Feldboden 4 ausschnittsweise dar.

Die Rundballenpresse 2 umfasst eine Pick-up 3 mit einem Zinkenrotor 31 zum Aufnehmen von Erntegut vom Feldboden 4, sowie einen Übergaberotor 24, der zum Fördern des Ernteguts in eine Presskammer 20 der Rundballenpresse 2 vorgesehen ist. Die Pick-up 3 ist zur Aufnahme von Erntegut stirnseitig bodennah an der Rundballenpresse 2 aufgehängt. Das Erntegut, beispielsweise Heu oder Stroh, wird über die Pick-up 3 dem Zinkenrotor 31 zugeführt. Über den dem Zinkenrotor 31 nachgelagerten Übergaberotor 24 wird das Erntegut von dem Zinkenrotor 31 zur Presskammer 20 der Rundballenpresse 2 gefördert. Das Erntegut wird dabei durch einen in den Übergaberotor 24 eingreifenden Abstreifer 29 von diesem gelöst, und dabei in die Presskammer 20 der Rundballenpresse 2 gefördert.

Die Rundballenpresse 2 weist einen Pressrahmen 28 auf, an dem ein Fahrwerk (nicht bezeichnet) mit Rädern (nicht bezeichnet) angeordnet ist. In die erste Raumrichtung 52 gesehen ist die Presskammer 20 oberhalb des Fahrwerks angeordnet. In der Presskammer 20 ist wenigstens ein Pressriemen 22 zum Pressen des Ernteguts zu einem Ballen 6 angeordnet, der über Pressrollen 26 geführt ist, und der durch einen Riemenspanner 27 spannbar ist. Der Riemenspanner 27 spannt den Pressriemen 22 während des Pressvorgangs des Ballens 6, um das Erntegut in komprimierter Form zu einem Ballen 6 mit einer hohen Dichte und einer hohen Festigkeit zu pressen. Die Erfindung ist aber nicht auf Rundballenpressen 2 mit Pressriemen 22 zum Pressen des Ernteguts beschränkt, sondern umfasst auch Rundballenpressen (nicht gezeigt), die Ketten oder andere Techniken zum Pressen des Ernteguts nutzen.

Zum Abbinden des Ballens 6 mit einem Bindemittel (nicht gezeigt) wie beispielsweise einem Netz verfügt die Rundballenpresse 2 über eine stirnseitig der Rundballenpresse 2, d. h. in Fahrtrichtung 51 vorne, angeordnete Bindeeinheit 25.

Der Ballen 6 ist durch eine Heckklappe 21 auswerfbar, die nach dem Binden des Ballens 6 geöffnet wird. Um den Ballen 6 beim Auswerfen zu beschleunigen, umfasst die Rundballenpresse 2 einen am Pressrahmen 28 der Rundballenpresse 2 schwenkbar angeordneten Beschleuniger 23. Der Beschleuniger 23 wird beim Auswerfen des Ballens 6 aus dem Pressraum 20 durch das Gewicht des Ballens 6 auf den Feldboden 4 gedrückt, so dass er eine Rampe bildet. Dadurch rollt der Ballen 6 entlang der Rampe 23 auf den Feldboden 4 und wird dabei beschleunigt. Durch die Beschleunigung rollt der Ballen in die Trageinrichtung 12 des Ballensammelwagens 1 ein. Dabei erfasst der Sensor 15, wenn der Ballen 6 in der Trageinrichtung 12 angeordnet ist.

Fig. 3 (a) zeigt eine leere Rundballenpresse 2, deren Heckklappe 21 geschlossen G ist. Der Ballensammelwagen 1 ist in Fahrtrichtung 51 hinten an die Rundballenpresse 2 angehängt. Die Trageinrichtung 12 des Ballensammelwagens 1 befindet sich in der Transportstellung T. Der Beschleuniger 23 ist unbelastet U.

In Fig. 3 (b) ist im Pressraum 20 ein gepresster erster Ballen 6, I angeordnet. Dabei ist die Heckklappe 21 noch geschlossen G. Die Trageinrichtung 12 des Ballensammelwagens 1 ist gegenüber der in Fig. 3 (a) dargestellten Transportstellung T in die Ladestellung L verschwenkt.

Eine Steuerungseinheit 82 (s. Fig. 4) der Rundballenpresse 2 ist dazu eingerichtet, einen Bindevorgang zu starten, wenn der Ballen 6, I einen vorgegebenen Ballendurchmesser erreicht hat. Beim Bindevorgang wird der Ballen 6, I mit dem Bindemittel, beispielsweise aus einem Netz oder aus einer Folie, gebunden. Damit kein Erntegut mehr in die Presskammer 20 gefördert wird, wird die Rundballenpresse 2 dafür angehalten. Dies kann durch einen Bediener der Rundballenpresse 2 erfolgen. Alternativ kann das Anhalten auch automatisch erfolgen, indem die Steuerungseinheit 82 der Rundballenpresse 2 dem Schlepper 7 den Start des Bindevorgangs signalisiert, und der Schlepper 7 daraufhin anhält.

Um die Trageinheit 12 des Ballensammelwagens 1 von der Transportstellung T in die Ladestellung L zu verschwenken, wird ein Signal von der Rundballenpresse 2 oder dem Schlepper 7 genutzt. Als Signal ist beispielsweise das Anhalten des Arbeitszugs 9, der Start des Bindevorgangs, oder das Öffnen der Heckklappe 21 nutzbar. Beim Verschwenken der Trageinheit 12 werden die Kolbenstangen der Aktoren 131, 132 verkürzt und das Rückstellmittel 141, 142 weiter gespannt (s. Fig. 1 (b)).

Das Öffnen der Heckklappe 21 kann manuell durch den Bediener erfolgen. Alternativ oder zusätzlich kann die Steuerungseinheit 82 der Rundballenpresse 2 dazu eingerichtet sein, die Heckklappe 21 zu öffnen und den ersten Ballen 6, I auszuwerfen, wenn dieser gebunden ist.

Fig. 3 (c) zeigt die Rundballenpresse 2 und den Ballensammelwagen 1 bei ausgeworfenem erstem Ballen 6, I. Die Heckklappe 21 der Rundballenpresse 2 befindet sich im geöffneten Zustand O.

Aufgrund der Belastung durch den ersten Ballen 6, I wird der Beschleuniger 23 beim Auswerfen durch diesen auf den Feldboden 4 gedrückt, so dass er eine Rampe bildet, die den Ballen 6 beim Auswerfen beschleunigt. Fig. 3 (c) zeigt den auf den Feldboden 4 verschwenkten Beschleuniger 23 im belasteten Zustand B, sowie den ersten Ballen 6, I, während dieser in die in Ladestellung L befindliche Trageinrichtung 12 rollt. Beim Einrollen des Ballens 6, I in die Trageinrichtung 12 ziehen die Rückstellmittel 141, 142 diese in die Transportstellung T. Dabei expandieren die Kolbenstangen der Aktoren 131, 132.

Die Steuerungseinheit 82 der Rundballenpresse 2 ist dazu eingerichtet, die Heckklappe 21 zu schließen, wenn der Beschleuniger 23 unbelastet U ist. Das Schließen der Heckklappe 21 kann aber auch über eine Zeitsteuerung erfolgen.

Fig. 3 (d) zeigt den ersten Ballen in der Trageinrichtung 12, wobei diese in der Transportstellung angeordnet ist. Durch die Lage des Ballens 6, I in der Transportstellung T wird das Kollidieren der Heckklappe 21 mit dem Ballen 6, I verhindert. Dies ist hier durch eine Linie H, welche den Verlauf des Schwenkradius eines äußeren Endes der Heckklappe 21 beim Öffnen und Schließen zeigt, schematisch dargestellt.

Der erste Ballen 6, I kann nun mit dem Arbeitszug 9 zu einem anderen Ablageort transportiert werden, an dem er zusammen mit dem nachfolgenden zweiten Ballen 6, II abgelegt wird. Dafür wird die Erntefahrt fortgesetzt, wobei die Rundballenpresse 2 Erntegut aufnimmt und zu dem zweiten Ballen 6, II presst. Der zweite Ballen 6, II wird gebunden, wenn er den vorgegebenen Ballendurchmesser erreicht hat. Die Steuerungseinheit 82 der Rundballenpresse 2 ist dazu eingerichtet, den Start des Bindevorgangs anzuzeigen. Das Signal wird dazu genutzt, die Trageinheit 12 des Ballensammelwagens 1 von der Transportstellung T in die Abladestellung A zu verschwenken. Beim Verschwenken der Trageinrichtung 12 aus der Transportstellung T in die Abladestellung A werden die Kolbenstangen der Aktoren 131, 132 durch ein weiteres Entspannen der Rückstellmittel 141, 142 ausgefahren.

In Fig. 3 (e) ist der zweite Ballen 6, II im Pressraum 20 angeordnet. Die Trageinrichtung 12 ist gegenüber der in Fig. 3 (d) dargestellten Transportstellung T in die Abladestellung A verschwenkt. Fig. 3 (e) zeigt daher den Ballensammelwagen 1 beim Auswerfen des ersten Ballens 6, I. Dabei rollt der erste Ballen 6, I aus der Trageinrichtung 12. Dies wird mittels des Sensors 15 erfasst. Der zweite Ballen 6, II ist dabei bereits gebunden.

Nach dem Auswerfen des ersten Ballens 6, I wird die Trageinrichtung 12 von der Abladestellung A in die Ladestellung L verschwenkt. Die Kolbenstangen der Aktoren 131, 132 werden dabei verkürzt, wodurch die Rückstellmittel 141, 142 gespannt werden und die Trageinrichtung 12 von der Abladestellung A in die Ladestellung L verschwenkt. Der zweite Ballen 6, II kann wie in Fig. 3 (c) beschrieben in die Trageinrichtung 12 rollen. Der Arbeitszug 9 befindet sich dann in dem in Fig. 3 (b) dargestellten Zustand.

Anschließend kann der zweite Ballen 6, II analog zu den in den Fig. 3 (c) - (e) beschriebenen Verfahrensschritten aus der Rundballenpresse 2 ausgeworfen, in die Trageinrichtung 12 aufgenommen und anschließend aus dieser ausgeworfen werden.

Fig. 3 (f) zeigt den Ballensammelwagen 1 beim Auswerfen des zweiten Ballens 6, II.

Der zweite Ballen 6, II tendiert dazu, in etwa dieselbe Ablageposition zu rollen, wie der erste Ballen 6, I. Er rollt daher gegen den ersten Ballen 6, I.

Beim Zurückschwenken der Trageinrichtung 12 von der Abladestellung A in die Transportstellung T wird der zweite Ballen 6, II von der Trageinrichtung 12 gegen den ersten Ballen 6, I gedrückt. Dabei verhaken sich die Ballen 6, I, 6, II ineinander. Dadurch liegen sie unmittelbar aneinander an.

Die Ballen können später mit einer handelsüblichen Aufnahmegabel (nicht gezeigt) von einem Schlepper aufgenommen und auf ein Transportfahrzeug abgelegt werden (nicht gezeigt).

Durch die Nutzung des Ballensammelwagens 1 werden immer zwei Ballen 6, I, II unmittelbar nebeneinander abgelegt. Dadurch sind die Ballen 6, I, II nur an halb so vielen Ablageorten abgelegt. Das Einsammeln der Ballen 6 kann daher entsprechend schneller erfolgen. Der beim Einsammeln zurückgelegte Fahrweg ist dadurch zudem erheblich verringert, so dass der Kraftstoffverbrauch für den Erntevorgang insgesamt verringert ist.

Durch weitere Sensorik (nicht gezeigt) am Ballensammelwagen 1 kann das Verfahren sehr schnell durchgeführt werden, so dass der Arbeitsprozess trotz des Stillstandes der Rundballenpresse 2 letztendlich nur sehr kurzzeitig unterbrochen werden muss.

Fig. 4 zeigt schematisch einen Arbeitszug 9 umfassend einen Schlepper 7, eine Rundballenpresse 2 und einen Ballensammelwagen 1.

Die Rundballenpresse 2 ist heckseitig an den Schlepper 7 angehängt. Sie ist über Energiekupplungen (nicht gezeigt), wie beispielweise eine Zapfwelle und/oder Hydraulikkupplungen, an den Schlepper 7 leistungsempfangend angebunden. Anstelle der Kombination aus Schlepper 7 und Rundballenpresse 2 kann auch eine selbstfahrende Rundballenpresse genutzt werden.

Der Ballensammelwagen 1 ist über die Deichsel 17 (s. Fig. 1 (d)) an die Rundballenpresse 2 angelenkt, und über Energiekupplungen (nicht gezeigt) leistungsempfangend mit der Rundballenpresse 2 und/oder dem Schlepper 7 verbunden.

Der Ballensammelwagen 1 weist mindestens den Sensor 15 auf, mit dem der in der Trageinrichtung 12 angeordnete Ballen 6 erfasst wird. Zudem können weitere Sensoren (nicht dargestellt) vorgesehen sein, die beispielsweise die Stellungen L, T, A der Trageinrichtung 12 erfassen. Dadurch kann das Laden und Abwerfen eines Ballens 6 schneller erfolgen.

Prinzipiell kann die Steuerung der Trageinrichtung 12 des Ballensammelwagens 1 durch eine Steuerungseinrichtung (nicht gezeigt) des Schleppers 7 erfolgen. Die Steuerung der Trageinrichtung 12 des Ballensammelwagens 1 erfolgt hier aber durch eine Steuerungseinrichtung 82 der Rundballenpresse 2. Dabei kann ein Signal zum Start des Bindevorgangs oder zum Öffnen der Heckklappe 21 genutzt werden, um die Trageinrichtung 12 zum Aufnehmen des ersten Ballens 6, I in die Ladestellung L zu verschwenken.

Zum Abwerfen des ersten Ballens 6, I wird das Signal zum Start des Bindevorgangs genutzt. Die Zeit, in der der zweite Ballen 6, II gebunden wird, reicht zum Auswerfen des ersten Ballens 6, I und zum Verschwenken der Trageinrichtung 12 von der Abladestellung A in die Ladestellung L aus. Der zweite Ballen 6, II kann dann durch Verschwenken der Trageinrichtung 12 von der Ladestellung L in die Abladestellung A ausgeworfen werden.

Dabei wird kein weiteres Signal von der Rundballenpresse 2 benötigt. Die Rundballenpresse 2 kann daher so arbeiten, als wäre der Ballensammelwagen 1 gar nicht angehängt.

## Patentansprüche

1. Ballensammelwagen (1) zum Anhängen an eine Rundballenpresse (2) und zum Transportieren eines Ballens (6), mit einer Trageinrichtung (12) zum Tragen des Ballens (6), die zum Aufnehmen des Ballens (6) in eine Ladestellung (L), zum Transport des Ballens (6) in eine Transportstellung (T), und zur Abgabe des Ballens (6) auf einen Feldboden (4) in eine Abladestellung (A) verstellbar ist, wobei der Ballensammelwagen (1) zwei Räder (16) aufweist,
**dadurch gekennzeichnet, dass**
die Trageinrichtung (12) in eine erste Raumrichtung (52) gesehen auf Höhe von oder unterhalb einer Radachse (163) eines Rades (16) des Ballensammelwagens (1) gelagert ist, und/oder dass
die Trageinrichtung (12) zwischen den beiden Rädern (16) des Ballensammelwagens (1) angeordnet ist.

2. Ballensammelwagen (1) nach Anspruch 1, **dadurch gekennzeichnet, dass** die Trageinrichtung (12) Haltestreben (121, 122, 123, 124, 125, 126), die insbesondere Hohlprofile aufweisen, umfasst.

3. Ballensammelwagen (1) nach einem der vorherigen Ansprüche, **dadurch gekennzeichnet, dass** die Trageinrichtung (12) seitliche Haltestreben (125, 126) zum Führen des Ballens (6) umfasst.

4. Ballensammelwagen (1) nach einem der vorherigen Ansprüche, **dadurch gekennzeichnet, dass** die Räder (16) einzeln an einem Rahmen (11) des Ballensammelwagens (1) aufgehängt sind.

5. Ballensammelwagen (1) nach einem der vorherigen Ansprüche, **dadurch gekennzeichnet, dass** der Rahmen (11) im Wesentlichen U- förmig ausgebildet ist, und für jedes der Räder (16) jeweils einen auskragenden Haltearm (111) umfasst, an dem das ihm zugeordnete Rad (16) aufgehängt ist.

6. Ballensammelwagen (1) nach einem der vorherigen Ansprüche, **dadurch gekennzeichnet, dass** an einem offenen Ende des Haltearms (111)jeweils ein Radlager (112) angeordnet ist, in dem die Radaufhängung (161), insbesondere um eine Fahrwerksachse (160) drehbar, aufgehängt ist.

7. Ballensammelwagen (1) nach einem der vorherigen Ansprüche, **dadurch gekennzeichnet, dass** die Trageinrichtung (12) an wenigstens einem Drehlager (127), insbesondere einem Gummilager, einem Kugelgelenklager oder Wälzlager, um eine Halteachse (120) in und gegen eine Schwenkrichtung (54) dreh- oder schenkbar gelagert ist.

8. Ballensammelwagen (1) nach einem der vorherigen Ansprüche, **dadurch gekennzeichnet, dass** er zum Schwenken der Trageinrichtung (12) wenigstens einen Aktor (131, 132) umfasst, insbesondere einen hydraulischen, pneumatischen, elektrischen oder elektrohydraulischen Aktor (131, 132).

9. Ballensammelwagen (1) nach einem der vorherigen Ansprüche, **dadurch gekennzeichnet, dass** der Aktor (131, 132) ein einfachwirkender Hydraulikzylinder (131, 132) ist, der zum Verstellen der Trageinrichtung (12) von der Abladestellung (A) in die Transportstellung (T) und/oder von der Transportstellung (T) in die Ladestellung (L) vorgesehen ist, und der Ballensammelwagen (1) ein Rückstellmittel (141, 142), insbesondere eine Feder (141, 142), zum Zurückstellen der Trageinrichtung (12) aufweist.

10. Ballensammelwagen (1) nach einem der vorherigen Ansprüche, **dadurch gekennzeichnet, dass** die Trageinrichtung (12) einen Sensor (15) umfasst, der dazu eingerichtet ist, zu erfassen, ob der Ballen (6) in der Trageinrichtung (12) angeordnet ist.

11. Ballensammelwagen (1) nach einem der vorherigen Ansprüche, **dadurch gekennzeichnet, dass** der Ballensammelwagen (1) eine Deichsel (17) aufweist, welche außenliegende Zugstangen (171) umfasst, die so angeordnet sind, dass sie den Ballen (6) beim Laden in die Trageinrichtung (12) seitlich führen.

12. Ballensammelwagen (1) nach einem der vorherigen Ansprüche, **dadurch gekennzeichnet, dass** die Deichsel (17) ein zentrales Kugelauge (180) und/oder wenigstens eine, insbesondere zwei, seitliche Zug- und/oder Druckstreben (181, 182) zum Anlenken des Ballensammelwagens (1) an einer Rundballenpresse (2) aufweist.

13. Arbeitszug umfassend eine Rundballenpresse (2) und einen Ballensammelwagen (1) nach einem der vorherigen Ansprüche.

14. Verfahren zum Entladen eines ersten und eines zweiten Ballens (6, I; 6, II) aus einer Rundballenpresse (2) eines Arbeitszuges nach Anspruch 13 auf einen Feldboden (4), wobei die Rundballenpresse (2) eine Presskammer (20) zum Pressen von Ballen (6, I; 6, II) umfasst, wobei der Ballensammelwagen (1) an die Rundballenpresse (2) angehängt ist, und eine Trageinrichtung (12) umfasst, die während der Bildung des zweiten Ballens(6, II) zum Tragen des ersten Ballens (6,I) vorgesehen ist, wobei die Ballen (6, I; 6, II) an derselben Abladeposition von der Rundballenpresse (2) abgelegt werden, und wobei der zweite Ballen (6, II) beim Abladen gegen den ersten Ballen (6, I) gedrückt wird.

15. Verfahren nach Anspruch 14, **dadurch gekennzeichnet, dass** die Trageinrichtung (12) von einer Transportstellung (T) ausgehend durch Schwenken in eine Schwenkrichtung (54) reversibel in eine Ladestellung (L), und von der Transportstellung (T) ausgehend durch Schwenken gegen die Schwenkrichtung (54) reversibel in eine Abladestellung (A) schwenkbar ist, wobei das Verfahren die aufeinander folgenden Schritte umfasst:
• Tragen des ersten Ballens (6, I) in der Trageinrichtung (12), wobei sich die Trageinrichtung (12) in der Transportstellung (T) befindet, während die Rundballenpresse (2) einen nachfolgenden zweiten Ballen (6, II) bildet;
• Starten einer Bindung des zweiten Ballens (6, II);
• Ablegen des ersten Ballens (6, I) auf den Feldboden (4) durch Verschwenken der Trageinrichtung (12) von der Transportstellung (T) in die Abladestellung (A);
• Schwenken der Trageinrichtung (12) von der Abladestellung (A) in die Ladestellung (L);
• Auswerfen des zweiten Ballens (6, II) aus der Rundballenpresse (2);
• Aufnehmen des zweiten Ballens (6, II) in die Trageinrichtung (12);
• Ablegen des zweiten Ballens (6, II) auf den Feldboden (4) durch Verschwenken der Trageinrichtung (12) von der Ladestellung (L) in die Abladestellung (A); und
• Schwenken der Trageinrichtung (12) von der Abladestellung (A) in die Transportstellung (T);
wobei der zweite Ballen (6, II) beim Zurückschwenken der Trageinrichtung (12) von der Abladestellung (A) in die Transportstellung (T) gegen den ersten Ballen (6, I) gedrückt wird.

16. Verfahren nach einem der Ansprüche 14 - 15, **dadurch gekennzeichnet, dass** die Rundballenpresse (2) während der Bindung des zweiten Ballens (6, II) anhält, bis der zweite Ballen (6, II) abgelegt, und die Trageinrichtung (12) in die Transportstellung (T) zurückschwenkt ist.
